# FASCICULE DE BREVET EUROPEEN

(11) **EP 1 762 431 B1**
(45) Date de publication et mention de la délivrance du brevet: **23.12.2009**
(21) Numéro de dépôt: 06291389.2
(22) Date de dépôt: 01.09.2006
(51) Int. Cl.: B60Q 1/08, B60Q 1/18

(54) **Dispositif d'éclairage pour véhicule automobile**
Beleuchtungsvorrichtung für Kraftfahrzeuge
Lighting assembly for vehicles

(30) Priorité: 09.09.2005 FR 0509233
(43) Date de publication de la demande: 14.03.2007
(73) Titulaire: VALEO VISION, 93012 Bobigny Cedex (FR)
(72) Inventeur: Albou, Pierre, 75013 Paris (FR); Reiss, Benoît, 95600 Eaubonne (FR); Fratty, Hector, 75016 Paris (FR)
(74) Mandataire: Lemaire, Marc

(56) Documents cités:
- DE-A1- 10 225 566
- DE-A1- 10 352 950
- DE-A1- 19 729 826
- FR-A- 2 786 448
- FR-A- 2 793 002

## Description

L'invention concerne un dispositif d'éclairage et/ou de signalisation pour véhicule automobile, qui sera désigné par la suite pour plus de concision sous le nom de projecteur. L'invention s'intéresse plus particulièrement aux projecteurs équipés de modules optiques aptes à émettre plusieurs faisceaux lumineux de caractéristiques, de photométries, différentes.

Différents types de faisceaux lumineux sont effectivement prévus et définis de façon réglementaire. Certains sont obligatoires, comme les faisceaux de type route et les faisceaux de type code ou croisement. D'autres ne sont pas à ce jour obligatoires mais peuvent apporter au conducteur un confort de vision supplémentaire, comme les faisceaux de type anti brouillard, ou les faisceaux de vue diurne.

On rappelle brièvement les caractéristiques des faisceaux les plus courants :
- des faisceaux de position, d'intensité et de portée faible, qui réalisent une fonction de signalisation,
- des faisceaux de croisement, ou codes, d'intensité plus forte et de portée sur la route avoisinant 70 mètres, qui sont utilisés essentiellement la nuit et dont la répartition du faisceau lumineux, à coupure généralement en forme de V, est telle qu'elle permet de ne pas éblouir le conducteur d'un véhicule croisé ;
- des faisceaux de route longue portée, et des feux de complément de type longue portée, dont la zone de vision sur la route avoisine 200 mètres, et qui doivent être éteints lorsque l'on croise un autre véhicule afin de ne pas éblouir son conducteur ; ce sont des faisceaux sans coupure,
- des faisceaux anti-brouillard, qui présentent une coupure de type plate.

D'autres faisceaux ont été plus récemment réglementés, regroupés sous le nom d'AFS (l'abréviation pour « Advanced Frontlighting System » en anglais). Il s'agit par exemple :
- de la fonction dite Town Light en anglais, pour feu de ville. Cette fonction assure l'élargissement d'un faisceau de type feu de croisement tout en diminuant légèrement sa portée ;
- de la fonction dite Motorway Light en anglais, pour feu d'autoroute. Cette fonction assure une augmentation de la portée d'un feu de croisement ;
- de la fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que les conducteurs des véhicules croisants ne soient pas éblouis par un reflet et que les performances en portée et visibilité à droite soient améliorées.

L'invention s'intéresse plus particulièrement à la fonction AFS dite « Motorway » ou « Autoroute », qui améliore le confort de conduite sur autoroute par rapport à un faisceau classique de type code par un apport de lumière supplémentaire à proximité de la coupure, avec notamment une augmentation de la valeur d'éclairement maximum autorisée, qui passe, en Europe, de 70 Lux à 120 Lux.

Des solutions ont été envisagées pour obtenir un tel faisceau, en ayant recours par exemple à un module optique multi-fonction, comprenant une source lumineuse et un cache mobile occultant sélectivement le flux lumineux émis par la source : selon la géométrie du bord du cache et sa position par rapport à la source, on peut obtenir avec un même module différentes coupures. Cette solution est intéressante, car elle est très compacte : avec une seule source lumineuse, par exemple une lampe xenon, on peut avoir trois fonctions : code, route et motorway. Cependant, elle requiert une grande précision dans le suivi du mouvement du cache d'une position à une autre.

Le but de l'invention est d'obtenir un faisceau de type « autoroute » amélioré, qui, notamment, respecte les réglementations, soit d'une mise en oeuvre plus aisée et qui soit d'un fonctionnement plus sûr.

L'invention a tout d'abord pour objet un dispositif d'éclairage pour véhicule automobile comportant une pluralité de modules optiques comportant chacun au moins une source lumineuse, ledit dispositif comprenant :
- un premier module optique apte à générer un premier faisceau à coupure sensiblement oblique, notamment un faisceau de type code,
- un second module optique apte à générer un second faisceau à coupure au moins partiellement plate, tel que ledit dispositif est apte à émettre un faisceau de type « autoroute » dit « motorway » par :

- décalage du faisceau émis par le premier module optique selon au moins une direction,
- superposition du faisceau décalé avec le faisceau émis par le second module optique.

On comprend par « module optique » un système optique comprenant au moins une source lumineuse éventuellement disposée dans un réflecteur, et éventuellement associée à un ou plusieurs éléments dioptriques du type lentille, par exemple une ou plusieurs diodes électroluminescentes regroupées, ou une lampe halogène ou xénon dans un réflecteur, et qui soit de préférence autonome, c'est-à-dire qui soit apte à être allumé ou éteint séparément des autres modules du projecteur.

On comprend par faisceau « décalé » un faisceau dont la direction principale du faisceau a été réorientée, mais sans modifier substantiellement la distribution angulaire/ la forme du faisceau en question.

L'invention propose donc l'obtention d'un faisceau de type Motorway en ajoutant un module complémentaire à un module connu générant un faisceau de type code. Mais une simple superposition des deux faisceaux ne s'est pas avérée pleinement satisfaisante, dans la mesure où l'intersection des deux faisceaux se trouve décalée par rapport à l'axe du véhicule ou que peuvent apparaître deux lignes de contraste parallèles.

L'invention propose donc de ne pas utiliser le faisceau de type code tel quel, mais de le réorienter d'abord de façon appropriée pour qu'il puisse être complété par un faisceau complémentaire de façon plus aisée. Le premier module remplit ainsi deux fonctions au moins : une fonction qu'il peut remplir à lui seul, la fonction code connue, et une fonction motorway, une fois réorienté et combiné à un second module optique.

Par exemple, le premier module peut également être apte à émettre un faisceau sans coupure, notamment un faisceau de type route, en passant notamment d'une émission de faisceau sans coupure à une émission de faisceau avec coupure. Cela peut être obtenu, par exemple à l'aide d'un cache mobile interceptant une partie du flux lumineux émis par la source lumineuse dudit module. D'autres possibilités consistent à utiliser des sources lumineuses bi-filament de type code/route, ou encore de prévoir que le réflecteur puisse se déplacer par rapport à la source lumineuse.

Avantageusement, le premier module est apte à émettre un faisceau à coupure oblique code en mode conduite à droite et un autre faisceau à coupure oblique inversé code en mode conduite à gauche. Diverses solutions techniques existent, notamment à l'aide d'un cache mobile.

Le premier module peut aussi être conçu de manière à ce qu'il soit apte à émettre un faisceau à coupure oblique code en mode conduite à droite et un autre faisceau code à coupure plate en mode touriste conduite à gauche ou inversement. Dans ce cas, le projecteur peut émettre un faisceau code en mode touriste en superposant un faisceau de type code à coupure plate en mode touriste émis par le module et le faisceau émis par le second module : l'apport de lumière apporté par le second module améliore la visibilité d'un code de type touriste.

Le projecteur selon l'invention peut aussi émettre un faisceau sans coupure de type route en superposant un faisceau de type route émis par le module , s'il est de type code/route, ou par un autre module et le faisceau émis par le second module.

Le projecteur peut aussi être apte à émettre un faisceau de type AWL, comme explicité plus haut, en superposant plusieurs faisceaux dont le faisceau émis par le second module. On peut ainsi superposer au faisceau émis par le second module un faisceau de type code AWL tel que décrit dans le brevet EP 1 308 669 : soit ce faisceau code AWL est émis par le premier module en suivant par exemple l'enseignement de ce brevet, soit il est émis par un autre module dédié AWL.

Tous ces modes de réalisation montrent que ce second module est conçu pour compléter au mieux un faisceau de type code pour obtenir une fonction « motorway », mais qu'il peut aussi être utilisé en complément à d'autres faisceaux (AWL, code à gauche, mode touriste) de façon très intéressante.

Avantageusement, le décalage du faisceau avec coupure émis par le premier module optique s'effectue au moins latéralement. On choisit notamment de tourner légèrement vers la gauche le faisceau quand il s'agit d'un projecteur de type trafic à droite, ce qui permet d'obtenir, comme détaillé plus loin, une superposition des deux faisceaux qui gagne en confort et en performances. La modification d'orientation du faisceau peut être obtenue par mouvement d'au moins un des composants du module ou du module tout entier, et on peut utiliser pour ce faire le mécanisme de code « tournant virage » dit DBL (pour « Dynamic bending Light » en anglais) si le module en question en est équipé.

Avantageusement, le décalage du faisceau avec coupure émis par le premier module optique s'effectue également substantiellement verticalement. Mais ce décalage vertical reste optionnel. Il s'est avéré que l'on obtenait un faisceau Motorway encore amélioré si l'on tournait légèrement le faisceau de type code vers le haut, se rapprochant ainsi d'une configuration dite « code relevé ». Pour modifier l'orientation du faisceau verticalement, on peut utiliser le mécanisme de correcteur (dynamique ou non) si le module en question en est équipé, ce qui est le cas notamment quand le module utilise une lampe de type xénon en Europe.

On remarque ainsi que le mouvement de pièces pour réorienter le faisceau code en mode Motorway peut être actionné avec des mécanismes déjà présents dans le projecteur, donc sans avoir à rendre significativement plus complexe sa conception.

Le second module optique n'est généralement, dans le contexte de l'invention, qu'un module complémentaire, allumé qu'en association avec le premier module. Il peut être choisi compact, et participer au style du projecteur en ayant un aspect différent de celui du premier module.

Selon un mode de réalisation, le premier module a au moins trois modes de fonctionnement :
- éteint,
- allumé en code en émettant un faisceau réglementaire de code à coupure oblique,
- optionnellement allumé en route en émettant un faisceau réglementaire sans coupure,
- allumé en fonction « autoroute » en émettant un faisceau à coupure oblique décalé par rapport au faisceau code et destiné à être complété par le faisceau émis par le second module optique.

Selon un mode de réalisation, le second module optique est apte à émettre un faisceau présentant une coupure plate de largeur angulaire d'environ +/- 1.5 à +/- 3° par rapport à la verticale.

De préférence, cette coupure plate est susbtantiellement centrée, éventuellement avec un léger décentrage, par exemple d'au plus 20% ou d'au plus 5 ou 10%, par rapport à l'axe vertical.

De préférence, cette coupure plate est localisée dans la zone centrale de vision et se prolonge au moins à l'une de ses extrémités, notamment chaque extrémité, par une portion de coupure oblique descendante. Alternativement, elle peut se prolonger à au moins l'une de ses extrémités par une portion de coupure non pas oblique mais sensiblement verticale.

On peut par exemple avoir une coupure plate localisée dans la zone centrale de vision et se prolongeant à chaque extrémité par une portion de coupure oblique descendante, de façon à délimiter une zone de coupure substantiellement sous une forme trapézoïdale, symétrique ou non par rapport à la verticale. On peut alternativement, si les deux extrémités se prolongent par des portions de coupure verticale, délimiter une zone de coupure substantiellement sous forme carrée ou rectangulaire.

De préférence, en fonction « autoroute », les faisceaux des deux modules se superposent de façon à ce que la coupure oblique du faisceau décalé du premier module et la coupure plate du faisceau du second module se croisent substantiellement en un point sur ou à proximité de l'axe vertical de la zone éclairée.

On peut aussi prévoir qu'en fonction « autoroute », les faisceaux se superposent, la coupure oblique du faisceau décalé et la coupure oblique prolongeant une des extrémités de la coupure plate du faisceau du second module se croisant en un point de façon à ce que la coupure résultante présente une rupture de pente. Comme mieux explicité à l'aide des figures détaillées plus loin, choisir des pentes différentes pour ces deux portions de coupure oblique appartenant à des faisceaux différents permet d'ajuster au mieux la transition entre les coupures des deux faisceaux, donc d'améliorer le confort de vision.

Avantageusement, au moins un des modules optiques comporte une diode électroluminescente ou une pluralité de diodes électroluminescentes, ou au moins une lampe (xénon, halogène) disposée dans un réflecteur et/ou associée à un élément dioptrique, ce dernier cas étant notamment décrit dans le brevet FR 05 02549 déposé le 15 mars 2005 et publié sous le numéro FR 2 883 359. Selon un exemple de réalisation, le premier module optique comprend un réflecteur et au moins une lampe de type halogène ou xenon et est équipé d'une fonction code virage tournant, et le second module optique comprend au moins une diode électroluminescente, par exemple associée à un réflecteur et un élément dioptrique.

L'invention a également pour objet le véhicule muni de tels projecteurs. Elle a également pour objet le procédé de mise en oeuvre des modules optiques précédemment décrits, où l'on obtient un faisceau lumineux de type « autoroute » en réorientant le faisceau code émis par le premier module optique et en allumant le second module optique, par une commande de préférence automatisée.

L'invention sera détaillée ci-après, à l'aide des figures suivantes:
**fig. 1 et 2****:** des représentations schématiques du projecteur selon l'invention.
**fig. 3 à 6** **:** des représentations schématiques de diagrammes de distributions de flux lumineux émis par les modules optiques M1 et M2 du projecteur selon la figure 1.
**fig. 7 à 9** **:** certaines des représentations schématique des figures 3 à 6 avec superposition de la distribution réellement mesurée.

Les figures sont très schématiques, et ne respectent pas l'échelle pour plus de clarté.

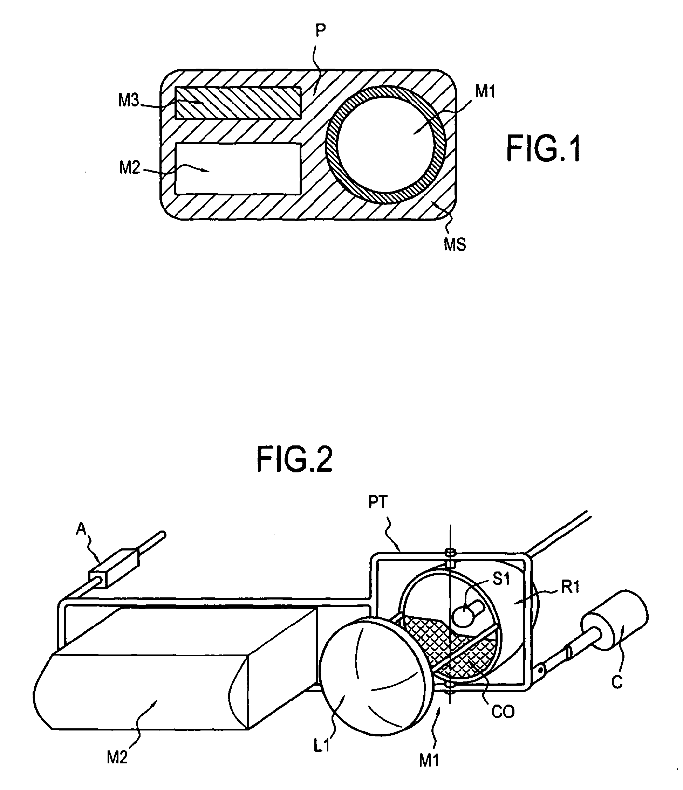

Les figures 1 et 2 montrent un projecteur P selon un exemple de réalisation non limitatif de l'invention comprenant deux modules optiques :
- le module M1 est un module bi-fonction code/route de type elliptique, qui comporte, de façon connue, une source lumineuse S1 sous forme d'une lampe xenon disposée dans un réflecteur R1 et un cache occultant CO occultant mobile, apte à passer d'une position où il est inactif vis-à-vis de la lumière émise par S1 (position « route ») à une position où son bord supérieur délimite dans le flux lumineux émis par S1 et réfléchi par R1 une coupure oblique (position « code »). Le module M1 est en outre équipé d'un correcteur CO d'assiette dynamique et d'une fonctionnalité code virage DBL : l'orientation de son faisceau est donc susceptible d'être modifiée latéralement et de haut en bas.
- le module M2 comprend une (ou une pluralité de) diodes électroluminescentes associée(s) à une lentille L et à une plieuse PL, comme notamment enseigné dans le brevet FR 04/06946 déposé le 24 juin 2004, publié sous le numéro FR 2 872 257 et correspondant au brevet européen EP 1610 057.

La figure 1 représente une face avant simplifiée d'un projecteur P, comprenant les modules M1 et M2, ainsi qu'un module optique indépendant M3 qui fournit la fonction indicateur de direction, et un masque de style MS.

La figure 2 précise la conception des modules M1 et M2 à l'intérieur du projecteur: M1 est un module de type elliptique, avec une lentille de Fresnel L, un réflecteur R1, une source lumineuse S1 de type lampe xenon. On voit de M2 l'élément dioptrique décrit dans le brevet précité, la source n'étant pas représentée. La platine PT supporte les modules M1 et M2 de façon connue dans le projecteur P. La figure 2 représente également le un ajusteur pour le réglage horizontal A. Les flèches associées au module M1 montent la façon dont le module tourne latéralement par rapport à la platine PT pour assurer sa fonction DBL.

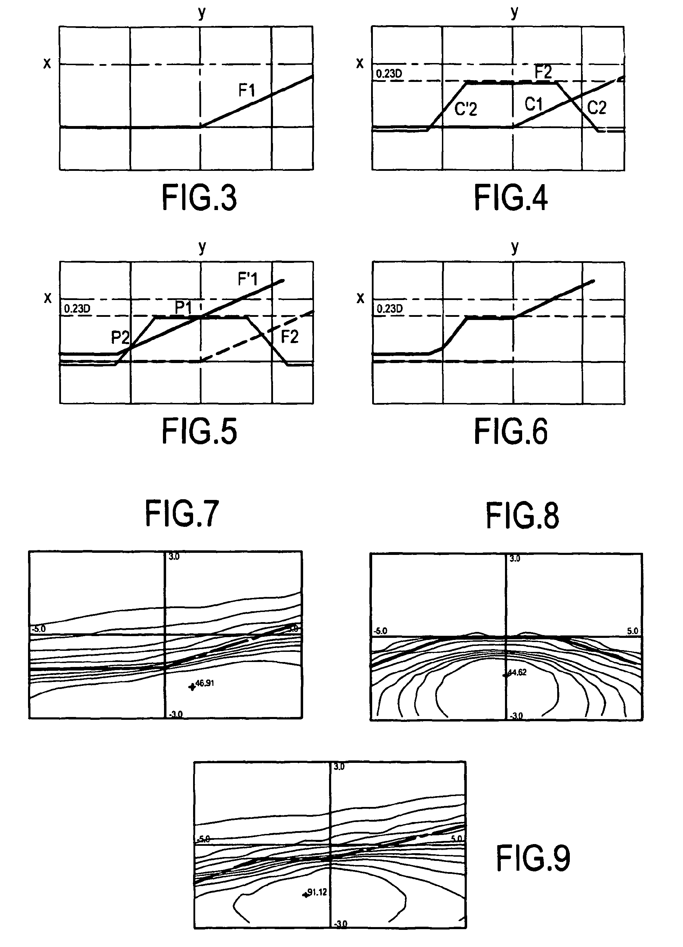

La figure 3 représente dans un repère orthonormé (Oxy) la distribution du flux lumineux F1 émis par M1 avec le cache C en position code : c'est un code conforme aux réglementations européennes en vigueur.

La figure 4 représente dans le même repère la distribution du flux lumineux F2 émis par M2 : c'est un faisceau dont la coupure comprend une zone de coupure C1 plate horizontale qui se trouve au centre du champ de vision symbolisée par le rectangle marqué en pointillés. Elle est centrée par rapport à l'axe vertical (Oy), et à chacune des extrémités de cette coupure C1 se trouvent deux zones de coupure descendante C2 et C2', qui se prolongent chacune par des zones horizontales.

Dans cet exemple, C1 est centré verticalement, mais un léger décentrage, notamment un déplacement vers la gauche est aussi possible (dans le cas d'un projecteur adapté à la conduite à droite, sinon c'est l'inverse qui est préférable). Dans cet exemple encore, C1, C2 et C2' forment une coupure en trapèze symétrique, mais ce n'est pas une obligation, et la pente de la coupure C2 peut être différente de celle de la coupure C2'. De préférence, la pente fait par rapport à un axe horizontal un angle compris entre 10 et 20°, notamment d'environ 12 à 16° dans le cas de la coupure se trouvant à gauche de la coupure plate quand on est en mode de conduite trafic à droite (et inversement) : cette pente-là est en effet la plus intéressante à ajuster au mieux pour le confort de vision. La coupure plate C1 se trouve à environ 0.23° sous l'axe horizontal (Ox), selon les conventions connues en optique.

La figure 4 montre la superposition des faisceaux F1 et F2 si on allume simultanément les deux modules, avec M1 en fonction code : on obtient une forme globale de coupure qui se rapproche d'une distribution de faisceau de type « Motorway », mais qui n'est pas satisfaisante : la forme globale en V n'est plus respectée, ce qui se traduit par un manque de confort et de performances pour le conducteur. En outre, le « V » de la coupure n'est pas situé sur l'axe vertical (Oy), ce qui n'est pas conforme à la définition réglementaire européenne actuelle du faisceau « Motorway ».

Comme illustré aux figures 5 et 6, l'invention propose donc d'associer au faisceau F2 un faisceau code F1' légèrement décalé vers la gauche (ce serait vers la droite en cas de projecteur adapté à la conduite à gauche), de façon à amener le V du faisceau sur l'axe vertical (Ox). Dans le cas où la coupure du faisceau code fait un angle de 15° avec l'horizontale, le décalage est d'environ 1.2° (par exemple compris entre 0.19° et 2°), quand la coupure du faisceau résultant Motorway est situé à 0.23° sous l'axe horizontal (0x). La figure 4 montre la superposition des faisceaux F1' et F2, et la figure 5 la coupure Motorway qui en résulte. La coupure en pointillé rappelle la position initiale code du faisceau F1. Ce décalage est obtenu en utilisant le mécanisme d'orientation du faisceau prévu pour la fonction code virage. Même décalé en position Motorway, la fonctionnalité code tournant peut être maintenue. On voit que la configuration du faisceau F2 permet d'ajouter de la lumière au dessus de la coupure oblique du « code décalé » F1', dans la zone à gauche de l'axe vertical (Oy), sans créer de points d'éblouissement qui ne seraient pas conformes cependant.

On remarque ici que F1' a non seulement été décalé vers la gauche par rapport à F1, mais qu'il a été un peu relevé dans un plan vertical, par le correcteur dynamique, ce qui peut-être avantageux mais reste optionnel.

Pour obtenir F1', tout se passe donc comme si on déréglait volontairement la position « au repos » du faisceau code F1, à l'aide des fonctionnalités existantes du module (correcteur dynamique ou statique, code tournant dans les virages).

Les figures 5 et 6 montrent que les coupures des faisceaux F1' et F2 se croisent au point P1, qui correspond au V de coupure et qui est bien, cette fois, sur l'axe vertical (Oy) conformément à la définition du Motorway réglementaire européenne actuelle. Elles se croisent aussi en un point P2, avec rupture de pente, ce qui permet une transition plus douce et confortable.

Les deux zones plates, à gauche, des faisceaux F1' et F2 peuvent être à des niveaux de hauteur légèrement différents, comme représenté, ou être au même niveau.

Les figures 7 à 9 représentent à nouveau les distributions respectivement des faisceaux F1', F2 et de la superposition des deux pour constituer un faisceau Motorway (lignes pointillées), mais en y ajoutant des lignes d'isolux réellement mesurées : on retrouve une bonne coïncidence entre les distributions « théoriques » des figures précédentes et les distributions réelles.

Les avantages de l'invention sont nombreux :
- le faisceau Motorway est compatible avec la réglementation européenne au moins, tout en ayant de bonnes performances optiques,
- l'alignement des deux coupures qui se superposent n'est pas extrêmement critique : un éventuel léger décalage relatif sera peu visible sur route, sans incidence notable donc, ce qui autorise des tolérances très avantageuses sur le plan industriel,
- le faisceau complémentaire F2 est compatible aussi bien avec les projecteurs adaptés à la conduite à droite qu'à la conduite à gauche : on peut conserver le même module M2 dans les deux cas. Si le module M1 est équipé d'une fonctionnalité lui permettant de passer d'un code trafic à droite à un code trafic à gauche (notamment à l'aide d'un cache occultant multi positions), on peut conserver le même projecteur dans les deux cas,
- on peut aussi adapter cette invention à des Motorway de type américain, en remplaçant le faisceau code F1 à coupure oblique européen par un faisceau du type code américain (« Z beam »),
- la coupure du faisceau F2 du module complémentaire M2 étant plate, le mouvement relatif du module M1 équipé de la fonctionnalité code virage a une influence peu élevée sur l'aspect global du faisceau Motorway. En conséquence, en conduite sur autoroute, où les rayons de courbure des virages sont généralement peu élevés, le module complémentaire M2 peut tout à fait rester fixe, alors que le code virage du faisceau F1' reste actif. On peut ainsi monter sur une platine commune les modules M1 et M2, seul M1 étant conçu pour être mobile par rapport à la platine, M2 restant fixe par rapport à celle-ci.
- le faisceau F2 peut aussi être exploité pour compléter des faisceaux de type AWL ou code touriste.

## Revendications

1. Dispositif d'éclairage pour véhicule automobile comportant une pluralité de modules optiques (M1,M2) comportant chacun au moins une source lumineuse (S1,S2), ledit dispositif comprenant :
- un premier module optique (M1) apte à générer un premier faisceau de croisement (F1),
- un second module optique (M2) apte à générer un second faisceau (F2) à coupure au moins partiellement plate, **caractérisé en ce que** ledit dispositif est apte à émettre un faisceau de type « autoroute » dit « motorway » par
- décalage du faisceau (F1) émis par le premier module optique (M1) selon au moins une direction,
- superposition du faisceau décalé (F1') avec le faisceau (F2) émis par le second module optique (M2).

2. Dispositif selon la revendication 1, **caractérisé en ce que** le premier module (M1) est également apte à émettre un faisceau sans coupure, notamment un faisceau de type route (F3), en passant d'une émission de faisceau sans coupure à une émission de faisceau avec coupure, notamment soit à l'aide d'un cache mobile interceptant une partie du flux lumineux émis par la source lumineuse (S1) dudit module (M1), soit à l'aide d'une lampe bi filament code/route, soit par déplacement du réflecteur du module par rapport à la source lumineuse.

3. Dispositif selon la revendication 1 ou 2, **caractérisé en ce que** le premier module (M1) est apte à émettre un faisceau de croisement à coupure oblique en mode conduite à droite et un autre faisceau de croisement à coupure oblique inversé en mode conduite à gauche.

4. Dispositif selon l'une des revendications précédentes, **caractérisé en ce que** le premier module (M1) est apte à émettre un faisceau de croisement à coupure oblique en mode conduite à droite et un autre faisceau de croisement à coupure plate en mode touriste conduite à gauche ou inversement.

5. Dispositif selon la revendication précédente, **caractérisé en ce que** ledit dispositif est apte à émettre un faisceau de croisement en mode touriste en superposant un faisceau de type de croisement à coupure plate en mode touriste émis par le module (M1) et le faisceau (F2) émis par le second module (M2).

6. Dispositif selon l'une des revendications précédentes, **caractérisé en ce que** ledit dispositif est apte à émettre un faisceau sans coupure de type route en superposant un faisceau de type route émis par le module (M1) s'il est de type croisement/route ou par un autre module et le faisceau (F2) émis par le second module (M2).

7. Dispositif selon l'une des revendications précédentes, **caractérisé en ce que** ledit dispositif est apte à émettre un faisceau de type AWL en superposant plusieurs faisceaux dont le faisceau (F2) émis par le second module (M2).

8. Dispositif selon l'une des revendications précédentes, **caractérisé en ce que** le décalage du faisceau avec coupure (F1') émis par le premier module optique (M1) s'effectue au moins latéralement, notamment par mouvement d'au moins un des composants du module (M1) ou du module tout entier à l'aide du mécanisme de code « tournant virage » dit DBL.

9. Dispositif selon la revendication précédente, **caractérisé en ce que** le décalage du faisceau avec coupure (F1') émis par le premier module optique (M1) s'effectue également substantiellement verticalement, notamment à l'aide du mécanisme de correcteur équipant ledit module (M1).

10. Dispositif selon l'une des revendications précédentes, **caractérisé en ce que** le décalage du faisceau avec coupure (F1') émis par le premier module optique (M1) s'effectue au moins latéralement vers la gauche, et optionnellement verticalement vers le haut, pour une conduite en trafic à droite.

11. Dispositif selon l'une des revendications précédentes **caractérisé en ce que** le second module optique (M2) n'est qu'un module complémentaire, allumé qu'en association avec le premier module (M1).

12. Dispositif selon l'une des revendications précédentes **caractérisé en ce que** le premier module (M1) a au moins trois modes de fonctionnement :
- éteint,
- allumé en fonction croisement en émettant un faisceau réglementaire de croisement à coupure oblique (F1),
- optionnellement allumé en route en émettant un faisceau réglementaire sans coupure (F3),
- allumé en fonction « autoroute » en émettant un faisceau à coupure oblique (F1') décalé par rapport au faisceau de croisement (F1) et destiné à être compléter par le faisceau émis par le second module optique (M2).

13. Dispositif selon l'une des revendications précédentes **caractérisé en ce que** le second module optique (M2) est apte à émettre un faisceau (F2) présentant une coupure plate de largeur angulaire d'environ +/- 1.5 à +/- 3° par rapport à l'axe vertical (Oy).

14. Dispositif selon l'une des revendications précédentes **caractérisé en ce que** le second module optique (M2) est apte à émettre un faisceau (F2) présentant une coupure plate substantiellement centrée, ou décentré d'au plus 20%, par rapport à l'axe vertical (Oy).

15. Dispositif selon l'une des revendications précédentes **caractérisé en ce que** le second module optique (M2) est apte à émettre un faisceau (F2) présentant une coupure plate (C1) localisée dans la zone centrale de vision et se prolongeant au moins une extrémité, notamment chaque extrémité, par une portion de coupure oblique descendante (C2,C2') ou verticale descendante.

16. Dispositif selon la revendication précédente **caractérisé en ce que** le second module optique (M2) est apte à émettre un faisceau (F2) présentant une coupure plate (C1) localisée dans la zone centrale de vision et se prolongeant à chaque extrémité par une portion de coupure oblique ou verticale descendante (C2,C2'), de façon à délimiter une zone de coupure substantiellement sous une forme trapézoïdale, carrée ou rectangulaire symétrique ou non par rapport à la verticale.

17. Dispositif selon l'une des revendications précédentes **caractérisé en ce que**, en fonction « autoroute », les faisceaux (F1') et (F2) se superposent de façon à ce que la coupure oblique du faisceau (F1') et la coupure plate du faisceau (F2) se croisent substantiellement en un point (P1) sur ou à proximité de l'axe vertical (Oy) de la zone éclairée.

18. Dispositif selon l'une des revendications précédentes **caractérisé en ce que**, en fonction « autoroute », les faisceaux (F1') et (F2) se superposent, la coupure oblique du faisceau (F1') et la coupure oblique prolongeant une des extrémités de la coupure plate du faisceau (F2) se croisant en un point (P2) de façon à ce que la coupure résultante présente une rupture de pente.

19. Dispositif ou ensemble selon l'une des revendications précédentes, **caractérisé en ce qu'**au moins un des modules optiques (M1,M2) comporte une diode électroluminescente ou une pluralité de diodes électroluminescentes, ou au moins une lampe disposée dans un réflecteur et/ou associée à au moins un élément dioptrique.

20. Dispositif ou ensemble selon la revendication précédente, **caractérisé en ce que** le premier module optique (M1) comprend un réflecteur et au moins une lampe de type halogène ou xénon et est équipé d'une fonction code virage tournant, et **en ce que** le second module optique (M2) comprend au moins une diode électroluminescente associée à un réflecteur ou un élément dioptrique.

21. Procédé de mise en oeuvre du dispositif selon l'une des revendications précédentes, **caractérisé en ce que** l'on obtient un faisceau lumineux de type « autoroute » en réorientant le faisceau de croisement émis par le premier module optique (M1) et en allumant le second module optique (M2), par une commande automatisée.

## Claims

1. Lighting device for a motor vehicle comprising a plurality of optical modules (M 1, M2), each of which comprises at least one source of light (S1, S2), the said device comprising:
- a first optical module (M1) which can generate a first, dipped beam (F1);
- a second optical module (M2) which can generate a second, cut-off beam (F2) which is at least partially flat, **characterised in that** the said device can emit a beam of the so called "motorway" type by:
- offsetting of the beam (F1) emitted by the first optical module (M1) according to at least one direction; and
- superimposition of the offset beam (F1') on the beam (F2) which is emitted by the second optical module (M2).

2. Device according to claim 1, **characterised in that** the first module (M1) can also emit a beam without cut-off, in particular a beam of the full-beam type (F3), by changing from emission of a beam without cut-off to emission of a beam with cut-off, in particular either by means of a mobile mask which intercepts part of the flow of light emitted by the source of light (S1) of the said module (M1), or by means of a dipped/ full-beam bi-filament lamp, or by displacement of the reflector of the module relative to the source of light.

3. Device according to claim 1 or claim 2, **characterised in that** the first module (M1) can emit an oblique cut-off beam in the mode for driving on the right, and another, inverted oblique cut-off, dipped beam in the mode for driving on the left.

4. Device according to one of the preceding claims, **characterised in that** the first module (M1) can emit an oblique dipped cut-off beam in the mode for driving on the right, and another, flat dipped cut-off beam in the cruising mode for driving on the left or conversely.

5. Device according to the preceding claim, **characterised in that** the said device can emit a dipped beam in cruising mode, by superimposing a beam of the flat dipped cut-off type in cruising mode emitted by the module (M1), on the beam (F2) emitted by the second module (M2).

6. Device according to one of the preceding claims, **characterised in that** the said device can emit a beam of the full-beam type without cut-off by superimposing a beam of the full-beam type emitted by the module (me), if the beam is of the dipped/ full-beam type, or by another module, on the beam (F2) emitted by the second module (M2).

7. Device according to one of the preceding claims, **characterised in that** the said device can emit a beam of the AWL type by superimposing a plurality of beams, including the beam (F2) emitted by the second module (M2).

8. Device according to one of the preceding claims, **characterised in that** the offsetting of the beam with cut-off (F1') emitted by the first optical module (M1) is carried out at least laterally, in particular by movement of at least one of the components of the module (me) or of the entire module, by means of the "bending" dipped mechanism known as DBL.

9. Device according to the preceding claim, **characterised in that** the offsetting of the beam with cut-off (F1') emitted by the first optical module (M1) is also carried out substantially vertically, in particular by means of the corrector mechanism which equips the said module (me).

10. Device according to one of the preceding claims, **characterised in that** the offsetting of the beam with cut-off (F1') emitted by the first optical module (M1) is carried out at least laterally towards the left, and optionally vertically upwards, for driving in traffic on the right.

11. Device according to one of the preceding claims, **characterised in that** the second optical module (M2) is only a complementary module which is switched on only in association with the first module (M1).

12. Device according to one of the preceding claims, **characterised in that** the first module (M1) has at least three functioning modes:
- switched off;
- switched on with dipped functioning, by emitting a regulation dipped beam with oblique cut-off (F2);
- optionally switched on in full-beam mode by emitting a regulation beam without cut-off (F3);
- switched on with "motorway" functioning by emitting an oblique cut-off beam (F1') which is offset relative to the dipped beam (F1), and is designed to be completed by the beam emitted by the second optical module (M2).

13. Device according to one of the preceding claims, **characterised in that** the second optical module (M2) can emit a beam (F2) which has a flat cut-off with an angular width of approximately ±1.5 to ±3° relative to the vertical axis (Oy).

14. Device according to one of the preceding claims, **characterised in that** the second optical module (M2) can emit a beam (F2) which has a flat cut-off which is substantially centred, or off-centred by at the most 20%, relative to the vertical axis (Oy).

15. Device according to one of the preceding claims, **characterised in that** the second optical module (M2) can emit a beam (F2) which has a flat cut-off (C1) which is localised in the central area of vision, and is extended at one end at least, and in particular at both ends, by a portion of descending oblique cut-off (C2, C2') or descending vertical cut-off.

16. Device according to the preceding claim, **characterised in that** the second optical module (M2) can emit a beam (F2) which has a flat cut-off (C1) which is localised in the central area of vision, and is extended on both sides by a portion of oblique cut-off or descending vertical cut-off (C2, C2'), such as to delimit an area of cut-off which is substantially in a form which is trapezoidal, square or rectangular, and may or may not be symmetrical, relative to the vertical.

17. Device according to one of the preceding claims, **characterised in that**, in "motorway" functioning, the beams (F2') and (F2) are superimposed such that the oblique cut-off of the beam (F2') and the flat cut-off of the beam (F2) intersect substantially at a point (P I) on or in the vicinity of the vertical axis (Oy) of the lit area.

18. Device according to one of the preceding claims, **characterised in that**, in "motorway" functioning, the beams (F2') and (F2) are superimposed, the oblique cut-off of the beam (F1') and the oblique cut-off which extends one of the ends of the flat cut-off of the beam (F2) intersecting at a point (P2), such that the resulting cut-off has a change of slope.

19. Device according to one of the preceding claims, **characterised in that** at least one of the optical modules (M1, M2) comprises an electroluminescent diode or a plurality of electroluminescent diodes, or at least one lamp which is disposed in a reflector and/or is associated with at least one dioptric element.

20. Device or assembly according to the preceding claim, **characterised in that** the first optical module (M1) comprises a reflector and at least one lamp of the halogen or xenon type, and is equipped with a bending dipped function, and **in that** the second optical module (M2) comprises at least one electroluminescent diode which is associated with a reflector or a dioptric element.

21. Method for implementation of the device according to one of the preceding claims, **characterised in that** a light beam of the "motorway" type is obtained by reorienting the dipped beam which is emitted by the first optical module (M1) and by switching on the second optical module (M2) by means of an automated command.

## Patentansprüche

1. Kraftfahrzeugbeleuchtungsvorrichtung mit einer Vielzahl von Optikmodulen (M1, M2), die jeweils wenigstens eine Lichtquelle (S1, S2) aufweisen, wobei die Vorrichtung umfasst:
- ein erstes Optikmodul (M1), das ein erstes Abblendlichtbündel (F1) zu erzeugen vermag,
- ein zweites Optikmodul (M2), das ein zweites Lichtbündel (F2) mit einer wenigstens zum Teil ebenen Hell-Dunkel-Grenze zu erzeugen vermag,
**dadurch gekennzeichnet, dass** die Vorrichtung ein Lichtbündel vom Typ Autobahnlicht zu emittieren vermag durch
- Verlagerung des vom ersten Optikmodul (M1) emittierten Lichtbündels (F1) in wenigstens eine Richtung,
- Überlagerung des verlagerten Lichtbündels (F1') mit dem vom zweiten Optikmodul (M2) emittierten Lichtbündel (F2).

2. Vorrichtung nach Anspruch 1,
**dadurch gekennzeichnet, dass** das erste Modul (M1) auch ein Lichtbündel ohne Hell-Dunkel-Grenze, insbesondere ein Lichtbündel vom Typ Fernlicht (F3), zu emittieren vermag durch einen Wechsel der Ausstrahlung eines Lichtbündels ohne Hell-Dunkel-Grenze zur Ausstrahlung eines Lichtbündels mit Hell-Dunkel-Grenze, insbesondere entweder mittels einer beweglichen Blende, die einen Teil des von der Lichtquelle (S1) des Moduls (M1) emittierten Lichtstroms abfängt, oder mittels einer Zweifadenlampe für Abblendlicht/Fernlicht oder durch Verlagerung des Reflektors des Moduls bezüglich der Lichtquelle.

3. Vorrichtung nach Anspruch 1 oder 2,
**dadurch gekennzeichnet, dass** das erste Modul (M1) ein Abblendlichtbündel mit schräger Hell-Dunkel-Grenze für Rechtsverkehr und ein anderes Abblendlichtbündel mit seitenverkehrter schräger Hell-Dunkel-Grenze für Linksverkehr zu emittieren vermag.

4. Vorrichtung nach einem der vorhergehenden Ansprüche,
**dadurch gekennzeichnet, dass** das erste Modul (M1) ein Abblendlichtbündel mit schräger Hell-Dunkel-Grenze für Rechtsverkehr und ein anderes Abblendlichtbündel mit ebener Hell-Dunkel-Grenze in einem Reisemodus für Linksverkehr oder umgekehrt zu emittieren vermag.

5. Vorrichtung nach dem vorhergehenden Anspruch,
**dadurch gekennzeichnet, dass** die Vorrichtung ein Abblendlichtbündel in dem Reisemodus zu emittieren vermag durch Überlagern eines von dem Modul (M1) emittierten Lichtbündels vom Typ Abblendlicht mit ebener Hell-Dunkel-Grenze im Reisemodus und des vom zweiten Modul (M2) emittierten Lichtbündels (F2).

6. Vorrichtung nach einem der vorhergehenden Ansprüche,
**dadurch gekennzeichnet, dass** die Vorrichtung ein Lichtbündel ohne Hell-Dunkel-Grenze vom Typ Fernlicht zu emittieren vermag durch Überlagern eines Lichtbündels vom Typ Fernlicht, das von dem Modul (M1) emittiert wird, wenn es vom Typ Abblendlicht/Fernlicht ist, oder von einem anderen Modul, und des vom zweiten Modul (M2) emittierten Lichtbündels (F2).

7. Vorrichtung nach einem der vorhergehenden Ansprüche,
**dadurch gekennzeichnet, dass** die Vorrichtung ein Lichtbündel vom Typ Schlechtwetterlicht durch Überlagern mehrerer Lichtbündel zu emittieren vermag, unter denen sich das vom zweiten Modul (M2) emittierte Lichtbündel (F2) befindet.

8. Vorrichtung nach einem der vorhergehenden Ansprüche,
**dadurch gekennzeichnet, dass** die Verlagerung des vom ersten Optikmodul (M1) emittierten Lichtbündels (F1') mit Hell-Dunkel-Grenze zumindest seitlich erfolgt, insbesondere durch Bewegen wenigstens eines der Bauteile des Moduls (M1) oder des gesamten Moduls mit Hilfe des dynamischen Kurvenlichtmechanismus.

9. Vorrichtung nach dem vorhergehenden Anspruch,
**dadurch gekennzeichnet, dass** die Verlagerung des vom ersten Optikmodul (M1) emittierten Lichtbündels (F1') mit Hell-Dunkel-Grenze auch im Wesentlichen vertikal erfolgt, insbesondere mit Hilfe des Korrekturstellers, mit dem das Modul (M1) ausgestattet ist.

10. Vorrichtung nach einem der vorhergehenden Ansprüche,
**dadurch gekennzeichnet, dass** bei einer Fahrt im Rechtsverkehr die Verlagerung des vom ersten Optikmodul (M1) emittierten Lichtbündels (F1') mit Hell-Dunkel-Grenze zumindest seitlich nach links und optional vertikal nach oben erfolgt.

11. Vorrichtung nach einem der vorhergehenden Ansprüche,
**dadurch gekennzeichnet, dass** das zweite Optikmodul (M2) lediglich ein Ergänzungsmodul ist, das nur in Verbindung mit dem ersten Modul (M1) eingeschaltet wird.

12. Vorrichtung nach einem der vorhergehenden Ansprüche,
**dadurch gekennzeichnet, dass** das erste Modul (M1) wenigstens drei Betriebsarten aufweist:
- ausgeschaltet,
- eingeschaltet im Abblendlichtmodus, wobei ein vorschriftsmäßiges Abblendlichtbündel mit schräger Hell-Dunkel-Grenze (F1) emittiert wird,
- optional eingeschaltet als Fernlicht, wobei ein vorschriftsmäßiges Lichtbündel ohne Hell-Dunkel-Grenze (F3) emittiert wird,
- eingeschaltet im Autobahnlichtmodus, wobei ein Lichtbündel mit schräger Hell-Dunkel-Grenze (F1') emittiert wird, das bezüglich des Abblendlichtbündels (F1) versetzt ist und dazu bestimmt ist, durch das vom zweiten Optikmodul (M2) emittierte Lichtbündel ergänzt zu werden.

13. Vorrichtung nach einem der vorhergehenden Ansprüche,
**dadurch gekennzeichnet, dass** das zweite Optikmodul (M2) ein Lichtbündel (F2) zu emittieren vermag, das eine ebene Hell-Dunkel-Grenze mit einer Winkelbreite von etwa +/- 1,5° bis +/- 3° bezüglich der vertikalen Achse (Oy) aufweist.

14. Vorrichtung nach einem der vorhergehenden Ansprüche,
**dadurch gekennzeichnet, dass** das zweite Optikmodul (M2) ein Lichtbündel (F2) zu emittieren vermag, das eine ebene Hell-Dunkel-Grenze aufweist, die bezüglich der vertikalen Achse (Oy) im Wesentlichen zentriert oder um höchstens 20 % dezentriert ist.

15. Vorrichtung nach einem der vorhergehenden Ansprüche,
**dadurch gekennzeichnet, dass** das zweite Optikmodul (M2) ein Lichtbündel (F2) zu emittieren vermag, das eine ebene Hell-Dunkel-Grenze (C1) aufweist, die im zentralen Sichtbereich liegt und wenigstens an einem Ende, insbesondere an jedem Ende durch einen Abschnitt mit schräg abfallender Hell-Dunkel-Grenze (C2/C2') oder vertikal abfallender Hell-Dunkel-Grenze verlängert ist.

16. Vorrichtung nach dem vorhergehenden Anspruch,
**dadurch gekennzeichnet, dass** das zweite Optikmodul (M2) ein Lichtbündel (F2) zu emittieren vermag, das eine ebene Hell-Dunkel-Grenze (C1) aufweist, die im zentralen Sichtbereich liegt und an jedem Ende durch einen Abschnitt mit schräg oder vertikal nach unten abfallender Hell-Dunkel-Grenze (C2/C2') so verlängert ist, dass bezüglich der Senkrechten ein im Wesentlichen trapezförmiger, quadratischer oder rechteckiger, symmetrischer oder nicht symmetrischer Hell-Dunkel-Grenzenbereich begrenzt wird.

17. Vorrichtung nach einem der vorhergehenden Ansprüche,
**dadurch gekennzeichnet, dass** sich die Lichtbündel (F1') und (F2) im Autobahnlichtmodus so überlagern, dass sich die schräge Hell-Dunkel-Grenze des Lichtbündels (F1') und die ebene Hell-Dunkel-Grenze des Lichtbündels (F2) im Wesentlichen in einem Punkt (P1) auf oder in der Nähe der vertikalen Achse (Oy) des Ausleuchtungsbereichs schneiden.

18. Vorrichtung nach einem der vorhergehenden Ansprüche,
**dadurch gekennzeichnet, dass** sich die Lichtbündel (F1') und (F2) im Autobahnlichtmodus überlagern, wobei sich die ebene Hell-Dunkel-Grenze des Lichtbündels (F1') und die eines der Enden der ebenen Hell-Dunkel-Grenze des Lichtbündels (F2) verlängernde schräge Hell-Dunkel-Grenze in einem Punkt (P2) so schneiden, dass die daraus resultierende Hell-Dunkel-Grenze einen Knick aufweist.

19. Vorrichtung oder Einheit nach einem der vorhergehenden Ansprüche,
**dadurch gekennzeichnet, dass** wenigstens eines der Optikmodule (M1, M2) eine Leuchtdiode oder eine Vielzahl von Leuchtdioden oder wenigstens eine in einem Reflektor angeordnete und/oder wenigstens einem dioptrischen Element zugeordnete Lampe umfasst.

20. Vorrichtung oder Einheit nach dem vorhergehenden Anspruch,
**dadurch gekennzeichnet, dass** das erste Optikmodul (M1) einen Reflektor und wenigstens eine Halogen- oder Xenon-Lampe umfasst und mit einer dynamischen Kurvenlichtfunktion ausgestattet ist, und dass das zweite Optikmodul (M2) wenigstens eine Leuchtdiode umfasst, die einem Reflektor oder einem dioptrischen Element zugeordnet ist.

21. Verfahren zum Betreiben der Vorrichtung nach einem der vorhergehenden Ansprüche,
**dadurch gekennzeichnet, dass** man ein Lichtbündel vom Typ Autobahnlicht erhält durch Neuausrichten des vom ersten Optikmodul (M 1) emittierten Abblendlichtbündels und Einschalten des zweiten Optikmoduls (M2) durch einen automatisierten Befehl.
